# EUROPÄISCHE PATENTSCHRIFT

(11) **EP 1 802 150 B1**
(45) Veröffentlichungstag und Bekanntmachung des Hinweises auf die Patenterteilung: **11.06.2014**
(21) Anmeldenummer: 06026023.9
(22) Anmeldetag: 15.12.2006
(51) Int. Cl.: H04W 28/08, H04W 92/20

(54) **Kommunikationssystem für mobile Endgeräte**
Communication system for mobile terminals
Système de communication pour terminaux mobiles

(30) Priorität: 23.12.2005 DE 102005062633
(43) Veröffentlichungstag der Anmeldung: 27.06.2007
(73) Patentinhaber: Vodafone Holding GmbH, 40213 Düsseldorf (DE)
(72) Erfinder: Jungmaier, Andreas Dr., 46049 Oberhausen (DE); Klüber, Ralf, 40668 Meerbusch (DE)
(74) Vertreter: Weisbrodt, Bernd

(56) Entgegenhaltungen:
- EP-A- 1 565 017
- US-A1- 2002 027 894
- US-A1- 2002 181 444
- US-A1- 2005 259 608

## Beschreibung

Die vorliegende Erfindung betrifft ein Kommunikationssystem bestehend aus einem zellularen Mobilfunknetz mit einer hierarchischen Zellstruktur auf wenigstens zwei voneinander unabhängigen Zellularebenen welche von Vermittlungsknoten für Kommunikationsverbindungen bereitstellenden Einrichtungen und im Mobilfunknetz betreibbaren mobilen Endgeräten ausgebildet sind, wobei die Einrichtungen jeweils eine einen bestimmten Flächenbereich für Kommunikationsverbindungen erfassende Zelle einer Zellularebene des Mobilfunknetzes ausbilden, zumindest einige der Einrichtungen auf den wenigstens zwei Zellularebenen des Mobilfunknetzes für Kommunikationsverbindungen über die wenigstens zwei Zellularebenen des Mobilfunknetzes miteinander ebenenweise koppelbar sind und eine Kommunikationsverbindung zwischen einem mobilen Endgerät und einer Einrichtung auf einer ersten Zellularebene des Mobilfunknetzes unter Nutzung einer Funkverbindung erfolgt. Ein solches Kommunikationssystem ist bereits aus der US-A1-2002/0181444 bekannt.

Ein derartiges Kommunikationssystem ist beispielsweise mit dem UMTS-Funknetzstandard (UMTS: Universal Mobile Telecommunications System) gegeben. Im Sinne der vorliegendenErfindung handelt es sich dabei um ein zellulares Mobilfunknetz mit einer hierarchischen Zellstruktur auf wenigstens zwei voneinander unabhängigen Zellularebenen, beispielsweise sogenannten World-, Makro-, Mikro und/oder Pikozellen, die teilweise mit- beziehungsweise ineinander verschachtelt und dementsprechend miteinander ebenenweise gekoppelt beziehungsweise koppelbar sind. Jede Zelle weist Vermittlungsknoten für Kommunikationsverbindungen bereitstellende Einrichtungen, insbesondere sogenannte Basisstationen und/oder Router auf, wobei auf der sogenannten Worldzellenebene Satelliten als Vermittlungsknoten für Kommunikationsverbindungen bereitstellende Einrichtungen zum Einsatz kommen.

Nachteilig bei der bisher bekannten Ausgestaltung entsprechender Kommunikationssysteme ist, dass bei Kommunikationsverbindungen in einer zellularen Ebene des Mobilfunknetzes die Anzahl von an der Kommunikationsverbindung beteiligter, Vermittlungsknoten für Kommunikationsverbindungen bereitstellender Einrichtungen und die entsprechende Anzahl an Kommunikationsübergaben zwischen den Einrichtungen, sogenannten Hops, mitunter sehr groß ist. Ferner ist eine Kommunikationsverbindung über entsprechende Vermittlungsknoten für Kommunikationsverbindungen bereitstellende Einrichtungen in anderen zellularen Ebenen des Mobilfunknetzes zwar möglich, allerdings wird dabei in der Regel das gleiche Übertragungsmedium, in der Regel eine Funkverbindung, genutzt, so dass mitunter die Kommunikationsverbindung störende Wechselwirkungen zwischen den einzelnen beteiligten Vermittlungsknoten für Kommunikationsverbindungen bereitstellenden Einrichtungen der zellularen Ebenen des Mobilfunknetzes gegeben sind. Darüber hinaus ist die Anbindungskapazität aufgrund der bisher für Kommunikationsverbindungen in höheren zellularen Ebenen des Mobilfunknetzes genutzten Übertragungsmedien beschränkt.

Vor diesem Hintergrund liegt der vorliegenden Erfindung die Aufgabe zugrunde, ein Kommunikationssystem der eingangs genannten Art derart zu verbessern, dass dieses unter Meidung der beschriebenen Nachteile weitestgehend störungsfreie Kommunikationsverbindungen mit einer höheren Anbindungskapazität ermöglicht, so dass insbesondere auf der zellularen Ebene der mobilen Endgeräte des Mobilfunknetzes eine Entlastung des Mobilfunknetzes erzielbar ist.

Zur technischen Lösung dieser Aufgabe wird mit der vorliegenden Erfindung ein Kommunikationssystem gemäß dem Anspruch 1 vorgeschlagen.

Die vorliegende Erfindung macht sich die Erkenntnis zunutzte, dass durch Nutzung wenigstens eines weiteren Übertragungsmediums seitens der Vermittlungsknoten für Kommunikationsverbindungen bereitstellenden Einrichtungen der wenigstens einen weiteren Zellularebene des Mobilfunknetzes sich die Anzahl an Kommunikationsübergaben (Hops) zwischen den Einrichtungen deutlich reduzieren und eine höhere Anbindungskapazität, insbesondere auf der ersten, für Kommunikationsverbindungen zwischen einem mobilen Endgerät vorgesehenen Zellularebene erzielen lässt. Dabei wird durch die erfindungsgemäße Nutzung wenigstens eines weiteren Übertragungsmediums seitens der wenigstens einen weiteren Zellularebene des Mobilfunknetzes der mitunter störende Einfluss von Wechselwirkungen zwischen den einzelnen Beteiligten, Vermittlungsknoten für Kommunikationsverbindungen bereitstellenden Einrichtungen weitestgehend vermieden beziehungsweise zumindest deutlich reduziert.

Übertragungsmedium im Sinne der vorliegenden Erfindung erfasst neben physikalisch vorhandenen Medien auch von solchen genutzte optische Spektren und/oder Frequenzbereiche als Kommunikationskanal für Kommunikationsverbindungen. Seitens der jeweiligen Übertragungsmedien werden für Kommunikationsverbindungen dabei vorteilhafterweise entsprechend geeignete Verfahren und Protokolle für Übertragungen verwendet, welche in der Regel standardisiert sind.

Eine vorteilhafte Ausgestaltung der Erfindung sieht vor, dass das Übertragungsmedium der Einrichtungen auf der ersten und/oder wenigstens einen weiteren Zellularebene des Mobilfunknetzes eine Funkverbindung ist. Eine bevorzugte Ausgestaltung der Erfindung sieht vor, dass auf der ersten Zellularebene die Funkverbindung eine Funkverbindung in dem für eine Kommunikationsverbindung zwischen einem mobilen Endgerät und einer Vermittlungsknoten für Kommunikationsverbindungen bereitstellenden Einrichtung auf der ersten Zellularebene des Mobilfunknetzes genutzten Frequenzbereich ist. Besonders bevorzugt ist hierbei eine Nutzung eines Frequenzbereiches gemäß dem GSM- und/oder UMTS-Funknetzstandard unter Verwendung der entsprechenden Protokolle für Kommunikationsverbindungen. Eine weitere bevorzugte Ausgestaltung der Erfindung sieht vor, dass auf der wenigstens einen weiteren Zellularebene die Funkverbindung eine Richtfunkverbindung ist. Als Funkverbindungen zwischen Vermittlungsknoten für Kommunikationsverbindungen bereitstellenden Einrichtungen der ersten Zellularebene und Vermittlungsknoten für Kommunikationsverbindungen bereitstellenden Einrichtungen einer weiteren Zellularebene des Mobilfunknetzes können neben Richtfunkverbindungen als Funkverbindungen vorteilhafterweise sogenannte WiMax-, WiFi- und/oder dergleichen Funkverbindungen zum Einsatz kommen.

In einer weiteren vorteilhaften Ausgestaltung der Erfindung ist das Übertragungsmedium Vermittlungsknoten für Kommunikationsverbindungen bereitstellenden der Einrichtungen auf der ersten und/oder der wenigstens einen weiteren Zellularebene des Mobilfunknetzes eine optische Verbindung, vorzugsweise erfolgend mittels Laser und/oder Freiraumoptiken, sogenannten Free Space Optics und/oder Glasfaserkabel. Entsprechende Übertragungsmedien kommen erfindungsgemäß zum Einsatz zwischen Vermittlungsknoten für Kommunikationsverbindungen bereitstellenden Einrichtungen auf der ersten Zellularebene und Vermittlungsknoten für Kommunikationsverbindungen bereitstellenden zwischen Vermittlungsknoten für Kommunikationsverbindungen bereitstellenden Einrichtungen wenigstens einer weiteren Zellularebene des Mobilfunknetzes.

Einer weitere vorteilhafte Ausgestaltung der Erfindung sieht vor, dass das Übertragungsmedium der Vermittlungsknoten für Kommunikationsverbindungen bereitstellenden Einrichtungen auf der ersten und/oder der wenigstens einen weiteren Zellularebene des Mobilfunknetzes eine kabel- beziehungsweise drahtgebundene Verbindung ist. Die kabel- beziehungsweise drahtgebundene Verbindung kommt als Übertragungsmedium dabei insbesondere zwischen Vermittlungsknoten für Kommunikationsverbindungen bereitstellenden Einrichtungen der ersten Zellularebene und der wenigstens einen weiteren Zellularebene des Mobilfunknetzes zum Einsatz.

Gemäß einer weiteren vorteilhaften Ausgestaltung der Erfindung erfolgt die ebenenweise Kopplung zwischen Einrichtungen der ersten Zellularebene des Mobilfunknetzes und Einrichtungen der wenigstens einen weiteren Zellularebene des Mobilfunknetzes über eine Funkverbindung. Gemäß einer bevorzugten Ausgestaltung der Erfindung ist die Funkverbindung eine Funkverbindung in dem für eine Kommunikationsverbindung zwischen einem mobilen Endgerät und einer Einrichtung auf der ersten Zellularebene des Mobilfunknetzes genutzten Frequenzbereich, vorzugsweise gemäß dem GSM- (GSM: Global System for Mobile Communications) und/oder UMTS-Funknetzstandard (UMTS: Universal Mobile Telecommunications System) und deren entsprechenden Protokollen für Kommunikationsverbindungen. Als Funkverbindungen können jedoch neben Richtfunkverbindungen auch sogenannte WiMax-, WiFi- und/oder dergleichen Funkverbindungen zum Einsatz kommen.

In einer weiteren vorteilhaften Ausgestaltung der Erfindung erfolgt die ebenenweise Kopplung zwischen Vermittlungsknoten für Kommunikationsverbindungen bereitstellenden Einrichtungen der ersten Zellularebene des Mobilfunknetzes und Vermittlungsknoten für Kommunikationsverbindungen bereitstellenden Einrichtungen der wenigstens einen weiteren Zellularebene des Mobilfunknetzes über eine optische Verbindung, vorzugsweise mittels Laser und/oder Freiraumoptiken (Free Space Optics) und/oder Glasfaserkabel.

Eine weitere vorteilhafte Ausgestaltung der Erfindung sieht vor, dass die ebenenweise Kopplung zwischen Vermittlungsknoten für Kommunikationsverbindungen bereitstellenden Einrichtungen der ersten Zellularebene des Mobilfunknetzes und Vermittlungsknoten für Kommunikationsverbindungen bereitstellenden Einrichtungen der wenigstens einen weiteren Zellularebene des Mobilfunknetzes über eine kabel- beziehungsweise drahtgebundene Verbindung erfolgt.

In einer besonderes bevorzugten Ausgestaltung der Erfindung bilden die Vermittlungsknoten für Kommunikationsverbindungen bereitstellenden Einrichtungen der ersten Zellularebene des Mobilfunknetzes jeweils eine einen bestimmten Flächenbereich abdeckende Zelle auf der ersten Zellularebene des Mobilfunknetzes und die Vermittlungsknoten für Kommunikationsverbindungen bereitstellenden Einrichtungen der wenigstens einen weiteren Zellularebene des Mobilfunknetzes jeweils eine einen bestimmten Flächenbereich überbrückende Zelle auf der jeweiligen weiteren Zellularebene des Mobilfunknetzes aus, wozu die Vermittlungsknoten für Kommunikationsverbindungen bereitstellenden Einrichtungen der wenigstens einen weiteren Zellularebene des Mobilfunknetzes miteinander vermascht verbunden sind. Die von den Zellen der Vermittlungsknoten für Kommunikationsverbindungen bereitstellenden Einrichtungen der ersten Zellularebene des Mobilfunknetzes abgedeckten Flächenbereiche sind gemäß einer bevorzugten Ausgestaltung der Erfindung dabei kleiner als die von den Zellen der Vermittlungsknoten für Kommunikationsverbindungen bereitstellenden Einrichtungen der wenigstens einen weiteren Zellularebene des Mobilfunknetzes überbrückten Flächenbereiche.

Eine weitere vorteilhafte Ausgestaltung der Erfindung sieht vor, dass sich die von den Zellen der Vermittlungsknoten für Kommunikationsverbindungen bereitstellenden Einrichtungen der Zellularebenen des Mobilfunknetzes erfassten Flächenbereiche zumindest teilweise überlappen. Auf diese Art und Weise lassen sich die Kommunikationsverbindung mitunter störende Wechselwirkungen zwischen den einzelnen an einer Kommunikationsverbindung beteiligten Einrichtungen des Mobilfunknetzes weiter reduzieren. Ferner können so auch bei unterschiedlichen Auslastungen des Mobilfunknetzes, insbesondere bei lokal im Mobilfunknetz auftretenden erhöhten Kommunikationsverbindungsanforderungen, die entsprechend benötigten Anbindungskapazitäten leichter bereitgestellt beziehungsweise besser gewährleistet werden.

Das erfindungsgemäße Kommunikationssystem ist in einer weiteren vorteilhaften Ausgestaltung der Erfindung gekennzeichnet durch Übergangseinrichtungen, sogenannte Gateways, zur Kopplung des Mobilfunknetzes mit wenigstens einem anderen Kommunikationsnetz über wenigstens eine Vermittlungsknoten für Kommunikationsverbindungen bereitstellende Einrichtung des Mobilfunknetzes. In einer bevorzugten Ausgestaltung der Erfindung ist das andere Kommunikationsnetz ein Fernsprechnetz, vorzugsweise ein diensteintegrierendes digitales drahtgebundenes Fernsprechjetz, vorzugsweise gemäß dem ISDN-Standard (ISDN: Integrated Services Digital Network). In einer weiteren vorteilhaften Ausgestaltung der Erfindung ist das andere Kommunikationsnetz ein Datennetzwerk, vorzugsweise ein paketvermitteltes Datennetzwerk, besonderes bevorzugt gemäß wenigstens einem Standard eines Internet-Protokolls (IP: Internet-Protokoll).

Weitere Einzelheiten, Merkmale und Vorteile der Erfindung werden nachfolgend anhand der in den Fig. der Zeichnung dargestellten Ausführungsbeispielen näher erläutert. Dabei zeigen:
- Fig.1: in einer schematischen Prinzipdarstellung ein Ausführungsbeispiel eines erfindungsgemäßen Kommunikationssystems und
- Fig.2: eine weitere schematische Prinzipdarstellung des erfindungsgemäß Kommunikationssystems gemäß Fig. 1.

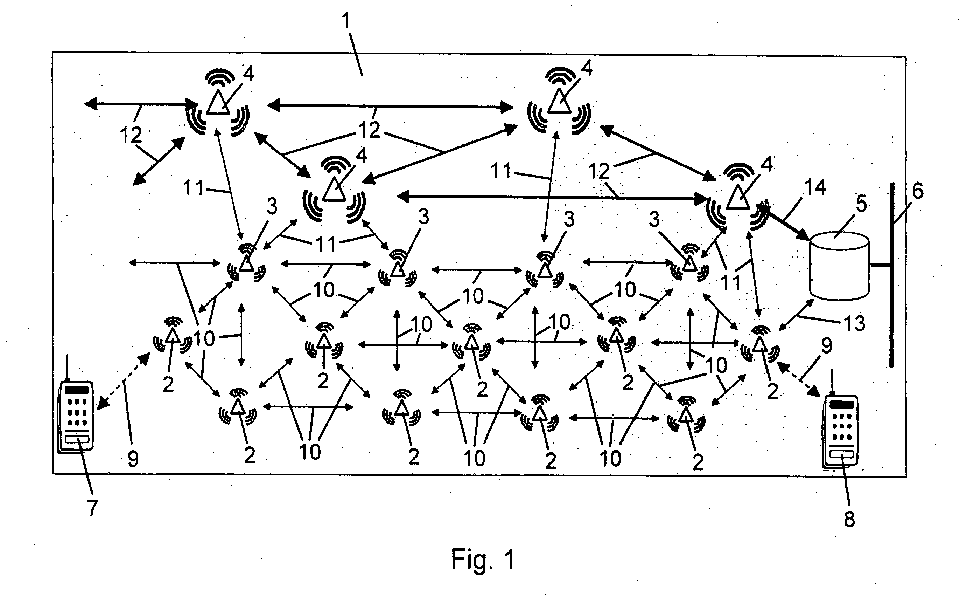

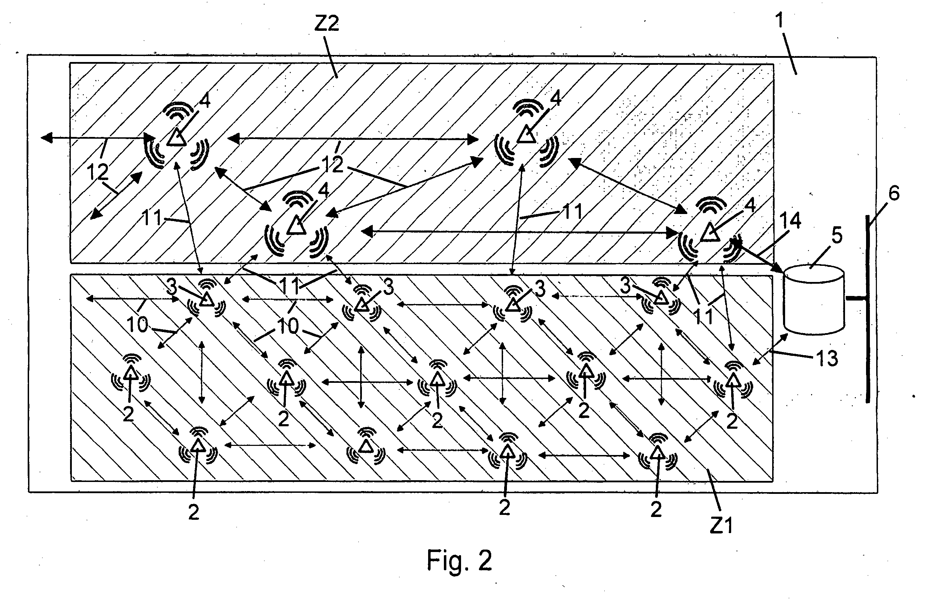

In den Fig. 1 und 2 ist ein Ausführungsbeispiel eines erfindungemäßen Kommunikationssystems bestehend aus einem zellularen Mobilfunknetz mit einer hierarchischen Zellstruktur und im Mobilfunknetz betreibbaren mobilen Endgeräten 7 und 8 dargestellt.

Das zellulare Mobilfunknetz weist vorliegend zwei voneinander unabhängige Zellularebenen Z1 und Z2 auf, welche von Vermittlungsknoten für Kommunikationsverbindungen bereitstellenden Einrichtungen 2, 3 und 4 ausgebildet werden. Die Vermittlungsknoten für Kommunikationsverbindungen bereitstellenden Einrichtungen 2 und 3 bilden dabei die erste Zellularebene Z1 aus, wobei die Einrichtungen 2 und 3 jeweils eine einen bestimmten Flächenbereich für Kommunikationsverbindungen abdeckende Zelle der ersten Zellularebene Z1 des Mobilfunknetzes ausbilden. Die Vermittlungsknoten für Kommunikationsverbindungen bereitstellenden Einrichtungen 4 bilden vorliegend die zweite Zellularebene des Mobilfunknetzes aus, wobei die Einrichtungen 4 vorliegend auf der zweiten Zellularebene Z2 des Mobilfunknetzes miteinander vermascht verbunden sind und so jeweils eine einen bestimmten Flächenbereich überbrückende Zelle auf der zweiten Zellularebene Z2 des Mobilfunknetzes ausbilden. Die entsprechend von den Zellen der Einrichtungen 2 und 3 der ersten Zellularebene Z1 des Mobilfunknetzes abgedeckten Flächenbereiche sind vorliegend kleiner als die von den Zellen der Einrichtungen 4 der zweiten Zellularebene Z2 des Mobilfunknetzes überbrückten Flächenbereiche. Die von den Zellen der Einrichtungen 4 der zweiten Zellularebene Z2 des Mobilfunknetzes erfassten Flächenbereiche 4 überlappen dabei vorliegend mehrere der von den Zellen der Einrichtungen 2 und 3 der ersten Zellularebene Z1 des Mobilfunknetzes abgedeckten Flächenbereiche. Die Vermittlungsknoten für Kommunikationsverbindungen bereitstellenden Einrichtungen 3 der ersten Zellularebene Z1 des Mobilfunknetzes und vorliegend die Vermittlungsknoten für Kommunikationsverbindungen bereitstellenden Einrichtungen 4 auf der zweiten Zellularebene Z2 des Mobilfunknetzes sind vorliegend ausgebildet für Kommunikationsverbindungen eine ebenenweise Kopplung von der ersten Zellularebene Z1 und der zweiten Zellularebene Z2 zu ermöglichen.

Das Kommunikationssystem 1 weist vorliegend ferner eine Übergangseinrichtung 5, vorliegend ein sogenanntes Gateway, zur Kopplung des Mobilfunknetzes mit einem weiteren Kommunikationsnetz 6, vorliegend einem diensteintegrierenden digitalen drahtgebundenen Fernsprechnetz 6 gemäß dem ISDN-Standard auf. Das Gateway 5 ist dabei mit einer einen Vermittlungsknoten für Kommunikationsverbindungen bereitstellenden Einrichtung 2 der ersten Zellularebene Z1 und einer einen Vermittlungsknoten für Kommunikationsverbindungen bereitstellenden Einrichtung 4 der zweiten Zellularebene Z2 über entsprechende Kommunikationsverbindungen 13 beziehungsweise 14 verbindbar.

Auf der ersten Zellularebene Z1 wird für Kommunikationsverbindungen 9 zwischen einem mobilen Endgerät 7 und 8, vorliegend Mobilfunktelefonen 7 und 8, als auch für Kommunikationsverbindungen 10 zwischen Einrichtungen 2 und 3 der der ersten Zellularebene Z1 als Übertragungsmedium für Kommunikationsverbindungen eine Funkverbindung genutzt, vorliegend eine dem GSM- und/oder UMTS-Funknetzstandard genügende Funkverbindung. Zur Kopplung der ersten Zellularebene Z1 mit der zweiten Zellularebene Z2 wird zwischen den Vermittlungsknoten für Kommunikationsverbindungen bereitstellenden Einrichtungen 3 der ersten Zellularebene Z1 und den Vermittlungsknoten für Kommunikationsverbindungen bereitstellenden Einrichtungen 4 der zweiten Zellularebene Z2 für entsprechende Kommunikationsverbindungen 11 ebenfalls eine Funkverbindung genutzt, vorliegend gemäß dem GSM- und/oder UMTS-Funknetzstandard. Für Kommunikationsverbindungen 12 auf der zweiten Zellularebene Z2 zwischen den Vermittlungsknoten für Kommunikationsverbindungen bereitstellenden Einrichtungen 4 wird vorliegend als Übertragungsmedium eine optische Verbindung genutzt, welche vorliegend mittels Laser und/oder Freiraumoptiken sogenannten Free Space Optics, ausgebildet beziehungsweise aufgebaut wird.

Bei den Vermittlungsknoten für Kommunikationsverbindungen bereitstellenden Einrichtungen 2 und 3 der ersten Zellularebene Z1 handelt es sich vorliegend um Basisstationen und/oder Router eines Mobilfunknetzes gemäß dem GSM- und/oder UMTS-Funknetzstandard.

Bei den Vermittlungsknoten für Kommunikationsverbindungen bereitstellenden Einrichtungen 4 auf der zweiten Zellularebene Z2 handelt es sich vorliegend um optische Übertragungstechniken nutzende Mesh-Router, welche ausgebildet sind mit Vermittlungsknoten für Kommunikationsverbindungen bereitstellenden Einrichtungen 3 der ersten Zellularebene Z1 über Funkverbindungen 11, vorliegend gemäß dem GSM- und/oder UMTS-Funknetzstandard zu kommunizieren.

Das Kommunikationssystem 1 ermöglicht mit den unterschiedlichen Übertragungsmedien auf der ersten Zellularebene Z1 und der zweiten Zellularebene Z2 den Aufbau von Kommunikationsverbindungen zwischen auf der ersten Zellularebene Z1 bereibbaren mobilen Endgeräten 7 und 8, vorliegend zwischen dem Mobilfunktelefon 7 und dem Mobilfunktelefon 8 mit der Möglichkeit einer deutlich reduzierten Anzahl an Kommunikationsübergaben, sogenannten Hops, zwischen den Einrichtungen 2 und 3 auf der ersten Zellularebene Z1 durch Nutzung von Einrichtungen 4 auf der zweiten Zellularebene Z2. Dadurch wird zum einen die Anbindungskapazität von mobilen Endgeräten 7 und 8 seitens des Kommunikationssystems 1 erhöht und ferner ist neben der Möglichkeit durch unterschiedliche Übertragungsmedien eine Entlastung des Mobilfunknetzes auf der ersten Zellularebene Z1 zu realisieren darüber hinaus durch eine Medientrennung auf der ersten Zellularebene Z1 und der zweiten Zellularebene Z2 sicherstellbar, dass Störungen der Einrichtungen 2 und 3 beziehungsweise 4 verursachende Wechselwirkungen vermieden werden.

Das in den Fig. der Zeichnung dargestellte Ausführungsbeispiel der Erfindung dient lediglich der Erläuterung der Erfindung und ist für diese nicht beschränkend.

### Bezugszeichenliste

- 1: Kommunikationssystem
- 2: Einrichtung (Vermittlungsknoten auf erster Zellularebene (Z1) bereitstellend)/Router/Basisstation (GSM-Standard)
- 3: Einrichtung (Vermittlungsknoten auf erster Zellularebene (Z1) und/oder Kopplung zu zweiter Zellularebene (Z2) bereitstellend)
- 4: Einrichtung (Vermittlungsknoten auf zweiter Zellularebene (Z2) und/oder Kopplung zu erster Zellularebene (Z1) bereitstellend)/Router
- 5: Übergangseinrichtung/Gateway in ein drahtgebundenes Fernsprechnetz (6)
- 6: drahtgebundenes Fernsprechnetz
- 7: mobiles Endgerät/Mobilfunktelefon
- 8: mobiles Endgerät/Mobilfunktelefon
- 9: Kommunikationsverbindung auf erster Zellularebene (Z1) (mobiles Endgerät (7, 8) <=> Einrichtung (2))
- 10: Kommunikationsverbindung auf erster Zellularebene (Z1) (Einrichtung (2, 3) <=> Einrichtung (2, 3))
- 11: Kommunikationsverbindung zwischen erster Zellularebene (Z1) und zweiter Zellularebene (Z2) (Einrichtung (3) <=> Einrichtung (4))
- 12: Kommunikationsverbindung auf zweiter Zellularebene (Z2) (Einrichtung (4) <=> Einrichtung (4))
- 13: Kommunikationsverbindung zwischen erster Zellularebene (Z1) und Festnetz (6) (Einrichtung (2, 3) <=> Übergangseinrichtung (5))
- 14: Kommunikationsverbindung zwischen zweiter Zellularebene (Z2) und Festnetz (6) (Einrichtung (4) <=> Übergangseinrichtung (5))

- Z1: Zellularebene (Funkverbindung/-übertragungstechnik)
- Z2: Zellularebene (optische Verbindung/Übertragungstechnik)

## Patentansprüche

1. Kommunikationssystem (1) bestehend aus einem zellularen Mobilfunknetz mit einer hierarchischen Zellstruktur auf wenigstens zwei voreinander unabhängigen Zellularebenen (Z1, Z2) welche von Vermittlungsknoten für Kommunikationsverbindungen bereitstellenden Einrichtungen (2, 3, 4) und im Mobilfunknetz betreibbaren mobilen Endgeräten (7, 8), ausgebildet sind wobei die Einrichtungen (2, 3, 4) jeweils eine einen bestimmten Flächenbereich für Kommunikationsverbindungen erfassende Zelle einer Zellularebene (Z1, Z2) des Mobilfunknetzes ausbilden, zumindest einige der Einrichtungen (3, 4) auf den wenigstens zwei Zellularebenen (Z1, Z2) des Mobilfunknetzes für Kommunikationsverbindungen über die wenigstens zwei Zellularebenen (Z1, Z2) des Mobilfunknetzes miteinander ebenenweise koppelbar sind und eine Kommunikationsverbindung (9) zwischen einem mobilen Endgerät (7, 8) und einer Einrichtung (2) auf einer ersten Zellularebene (Z1) des Mobilfunknetzes unter Nutzung einer Funkverbindung (9) erfolgt,
**dadurch gekennzeichnet, dass**
die Vermittlungsknoten für Kommunikationsverbindungen bereitstellenden Einrichtungen (2, 3) der ersten Zellularebene (Z1) des Mobilfunknetzes unter Nutzung eines ersten Übertragungsmediums und die Vermittlungsknoten für Kommunikationsverbindungen bereitstellenden Einrichtungen (4) der wenigstens einen weiteren Zellularebene (Z2) des Mobilfunknetzes unter Nutzung wenigstens eines weiteren Übertragungsmediums miteinander verbunden sind, wobei die Vermittlungsknoten für Kommunikationsverbindungen bereitstellenden Einrichtungen (4) der wenigstens einen weiteren Zellularebene (Z2) des Mobilfunknetzes miteinander vermascht verbunden sind, wobei die von den Zellen der Vermittlungsknoten für Kommunikationsverbindungen bereitstellenden Einrichtungen (2,3) der ersten Zellularebene (Z1) des Mobilfunknetzes abgedeckten Flächenbereiche kleiner sind als die von den Zellen der Vermittlungsknoten für Kommunikationsverbindungen bereitstellenden Einrichtungen (4) der wenigstens einen weiteren Zellularebene (Z2) des Mobilfunknetzes überbrückten Flächenbereiche.

2. Kommunikationssystem (1) nach Anspruch 1, **dadurch gekennzeichnet, dass** das wenigstens eine weitere Übertragungsmedium sich von dem ersten Übertragungsmedium unterscheidet.

3. Kommunikationssystem (1) nach Anspruch 1 oder Anspruch 2, **dadurch gekennzeichnet, dass** Übertragungsmedium der Vermittlungsknoten für Kommunikationsverbindungen bereitstellenden Einrichtungen (2, 3, 4) auf der ersten und/oder der wenigstens einen weiteren Zellularebene (Z1, Z2) des Mobilfunknetzes eine Funkverbindung (10, 11) ist.

4. Kommunikationssystem (1) nach Anspruch 3, **dadurch gekennzeichnet, dass** auf der ersten Zellularebene (Z1) die Funkverbindung (10) eine Funkverbindung (10) in dem für eine Kommunikationsverbindung (9) zwischen einem mobilen Endgerät (7,8) und einer Vermittlungsknoten für Kommunikationsverbindungen bereitstellenden Einrichtung (2, 3) auf der ersten Zellularebene (Z1) des Mobilfunknetzes genutzten Frequenzbereich ist.

5. Kommunikationssystem (1) nach Anspruch 3 oder Anspruch 4, **dadurch gekennzeichnet, dass** auf der wenigstens einen weiteren Zellularebene (Z2) die Funkverbindung eine Richtfunkverbindung ist.

6. Kommunikationssystem (1) nach einem der Ansprüche 1 bis 5, **dadurch gekennzeichnet, dass** Übertragungsmedium der Vermittlungsknoten für Kommunikationsverbindungen bereitstellenden Einrichtungen (2, 3, 4) auf der ersten und/oder der wenigstens einen weiteren Zellularebene (Z1, Z2) des Mobilfunknetzes eine optische Verbindung (12) ist, vorzugsweise erfolgend mittels Laser und/oder Freiraumoptiken (Free Space Optics) und/oder Glasfaserkabel.

7. Kommunikationssystem (1) nach einem der Ansprüche 1 bis 6, **dadurch gekennzeichnet, dass** Übertragungsmedium der Vermittlungsknoten für Kommunikationsverbindungen bereitstellenden Einrichtungen (2, 3, 4) auf der ersten und/oder der wenigstens einen weiteren Zellularebene (Z1, Z2) des Mobilfunknetzes eine kabel- bzw. drahtgebundene Verbindung ist.

8. Kommunikationssystem (1) nach einem der Ansprüche 1 bis 7, **dadurch gekennzeichnet, dass** die ebenenweise Kopplung zwischen Vermittlungsknoten für Kommunikationsverbindungen bereitstellenden Einrichtungen (3) der ersten Zellularebene (Z1) des Mobilfunknetzes und Vermittlungsknoten für Kommunikationsverbindungen bereitstellenden Einrichtungen (4) der wenigstens einen weiteren Zellularebene (Z2) des Mobilfunknetzes über eine Funkverbindung (11) erfolgt.

9. Kommunikationssystem (1) nach Anspruch 8, **dadurch gekennzeichnet, dass** die Funkverbindung (11) eine Funkverbindung (11) in dem für eine Kommunikationsverbindung (9) zwischen einem mobilen Endgerät (7, 8) und einer Vermittlungsknoten für Kommunikationsverbindungen bereitstellenden Einrichtung (2, 3) auf der ersten Zellularebene (Z1) des Mobilfunknetzes genutzten Frequenzbereich ist.

10. Kommunikationssystem (1) nach einem der Ansprüche 1 bis 7, **dadurch gekennzeichnet, dass** die ebenenweise Kopplung zwischen Vermittlungsknoten für Kommunikationsverbindungen bereitstellenden Einrichtungen (3) der ersten Zellularebene (Z1) des Mobilfunknetzes und Vermittlungsknoten für Kommunikationsverbindungen bereitstellenden Einrichtungen (4) der wenigstens einen weiteren Zellularebene (Z2) des Mobilfunknetzes über eine optische Verbindung erfolgt, vorzugsweise mittels Laser und/oder Freiraumoptiken (Free Space Optics) und/oder Glasfaserkabel.

11. Kommunikationssystem (1) nach einem der Ansprüche 1 bis 7, **dadurch gekennzeichnet, dass** die ebenenweise Kopplung zwischen Vermittlungsknoten für Kommunikationsverbindungen bereitstellenden Einrichtungen (3) der ersten Zellularebene (Z1) des Mobilfunknetzes und Vermittlungsknoten für Kommunikationsverbindungen bereitstellenden Einrichtungen (4) der wenigstens einen weiteren Zellularebene (Z2) des Mobilfunknetzes über eine kabel- bzw. drahtgebundene Verbindung erfolgt.

12. Kommunikationssystem (1) nach einem der Ansprüche 1 bis 11, **dadurch gekennzeichnet, dass** die Vermittlungsknoten für Kommunikationsverbindungen bereitstellenden Einrichtungen (2, 3) der ersten Zellularebene (Z1) des Mobilfunknetzes jeweils eine einen bestimmten Flächenbereich abdeckende Zelle auf der ersten Zellularebene des Mobilfunknetzes und die Vermittlungsknoten für Kommunikationsverbindungen bereitstellenden Einrichtungen (4) der wenigstens einen weiteren Zellularebene (Z2) des Mobilfunknetzes jeweils eine einen bestimmten Flächenbereich überbrückende Zelle auf der jeweiligen weiteren Zellularebene (Z2) des Mobilfunknetzes ausbilden, wozu die Vermittlungsknoten für Kommunikationsverbindungen bereitstellenden Einrichtungen (4) der wenigstens einen weiteren Zellularebene (Z2) des Mobilfunknetzes vorzugsweise miteinander vermascht verbunden sind.

13. Kommunikationssystem (1) nach Anspruch 12, **dadurch gekennzeichnet, dass** die von den Zellen der Vermittlungsknoten für Kommunikationsverbindungen bereitstellenden Einrichtungen (2, 3) der ersten Zellularebene (Z1) des Mobilfunknetzes abgedeckten Flächenbereiche kleiner sind als die von den Zellen der Vermittlungsknoten für Kommunikationsverbindungen bereitstellenden Einrichtungen (4) der wenigstens einen weiteren Zellularebene (Z2) des Mobilfunknetzes überbrückten Flächenbereiche.

14. Kommunikationssystem (1) nach einem der Ansprüche 1 bis 13, **dadurch gekennzeichnet, dass** sich die von den Zellen der Vermittlungsknoten für Kommunikationsverbindungen bereitstellenden Einrichtungen (2, 3, 4) der Zellularebenen (Z1, Z2) des Mobilfunknetzes erfassten Flächenbereiche zumindest teilweise überlappen.

15. Kommunikationssystem (1) nach einem der Ansprüche 1 bis 14, **gekennzeichnet durch** Übergangseinrichtungen (Gateway, 5) zur Kopplung des Mobilfunknetzes mit wenigstens einem anderen Kommunikationsnetz (6) über wenigstens eine Vermittlungsknoten für Kommunikationsverbindungen bereitstellende Einrichtung (2, 3, 4) des Mobilfunknetzes.

16. Kommunikationssystem (1) nach Anspruch 15, **dadurch gekennzeichnet, dass** das andere Kommunikationsnetz (6) ein drahtgebundenes Fernsprechnetz (6) ist, vorzugsweise ein diensteintegrierendes digitales drahtgebundenes Fernsprechnetz (6).

17. Kommunikationssystem (1) nach Anspruch 15 oder Anspruch 16, **dadurch gekennzeichnet, dass** das andere Kommunikationsnetz (6) ein Datennetzwerk ist, vorzugsweise ein paketvermittelndes Datennetzwerk.

## Claims

1. A communication system (1) consisting of a cellular mobile radio network having a hierarchical cell structure on at least two cellular levels (Z1, Z2) that are independent from each other and are formed by devices (2, 3, 4) which provide switching nodes for communication connections and mobile terminals (7, 8) that can be operated in the mobile radio network, wherein the devices (2, 3, 4) respectively form one cell of a cellular level (Z1, Z2) of the mobile radio network, which cell covers a particular surface area for communication connections, at least some of the devices (3, 4) on the at least two cellular levels (Z1, Z2) of the mobile radio network can be coupled to each other level by level over the at least two cellular levels (Z1, Z2) of the mobile radio network for communication connections and a communication connection (9) is established between a mobile terminal (7, 8) and a device (2) on a first cellular level (Z1) of the mobile radio network using a radio connection (9),
**characterized in that**
the devices (2, 3) which provide switching nodes for communication connections and are located on the first cellular level (Z1) of the mobile radio network are connected to each other by using a first transmission medium and the devices (4) which provide switching nodes for communication connections and are located on the at least one other cellular level (Z2) of the mobile radio network are connected to each other by using at least one other transmission medium, wherein the devices (4) which provide switching nodes for communication connections and are located on the at least one other cellular level (Z2) of the mobile radio network are connected to each other in an intermeshed manner, wherein the surface areas covered by the cells of the devices (2, 3) which provide switching nodes for communication connections and are located on the first cellular level (Z1) of the mobile radio network are smaller than the surface areas covered by the cells of the devices (4) which provide switching nodes for communication connections and are located on the at least one other cellular level (Z2) of the mobile radio network.

2. A communication system (1) according to claim 1, **characterized in that** the at least one other transmission medium differs from the first transmission medium.

3. A communication system (1) according to claim 1 or claim 2, **characterized in that** the transmission medium of the devices (2, 3, 4) which provide switching nodes for communication connections and are located on the first and/or the at least one other cellular level (Z1, Z2) of the mobile radio network is a radio connection (10, 11).

4. A communication system (1) according to claim 3, **characterized in that** on the first cellular level (Z1), the radio connection (10) is a radio connection (10) in the frequency range used for a communication connection (9) between a mobile terminal (7, 8) and a device (2, 3) which provides switching nodes for communication connections and is located on the first cellular level (Z1) of the mobile radio network.

5. A communication system (1) according to claim 3 or claim 4, **characterized in that** on the at least one other cellular level (Z2), the radio connection is a directional radio connection.

6. A communication system (1) according to one of the claims 1 through 5, **characterized in that** the transmission medium of the devices (2, 3, 4) which provide switching nodes for communication connections and are located on the first and/or the at least one other cellular level (Z1, Z2) of the mobile radio network is an optical connection (12) that is preferably realized by means of laser and/or Free Space Optics and/or fiber optic cable.

7. A communication system (1) according to one of the claims 1 through 6, **characterized in that** the transmission medium of the devices (2, 3, 4) which provide switching nodes for communication connections and are located on the first and/or the at least one other cellular level (Z1, Z2) of the mobile radio network is a cabled or wired connection.

8. A communication system (1) according to one of the claims 1 through 7, **characterized in that** the level by level coupling between devices (3) which provide switching nodes for communication connections and are located on the first cellular level (Z1) of the mobile radio network and devices (4) which provide switching nodes for communication connections and are located on the at least one other cellular level (Z2) of the mobile radio network is realized via a radio connection (11).

9. A communication system (1) according to claim 8, **characterized in that** the radio connection (11) is a radio connection (11) in the frequency range used for a communication connection (9) between a mobile terminal (7, 8) and a device (2, 3) which provides switching nodes for communication connections and is located on the first cellular level (Z1) of the mobile radio network.

10. A communication system (1) according to one of the claims 1 through 7, **characterized in that** the level by level coupling between devices (3) which provide switching nodes for communication connections and are located on the first cellular level (Z1) of the mobile radio network and devices (4) which provide switching nodes for communication connections and are located on the at least one other cellular level (Z2) of the mobile radio network is realized via an optical connection, preferably by means of laser and/or Free Space Optics and/or fiber optic cable.

11. A communication system (1) according to one of the claims 1 through 7, **characterized in that** the level by level coupling between devices (3) which provide switching nodes for communication connections and are located on the first cellular level (Z1) of the mobile radio network and devices (4) which provide switching nodes for communication connections and are located on the at least one other cellular level (Z2) of the mobile radio network is realized via a cabled or wired connection.

12. A communication system (1) according to one of the claims 1 through 11, **characterized in that** the devices (2, 3) which provide switching nodes for communication connections and are located on the first cellular level (Z1) of the mobile radio network respectively form a cell, which covers a particular surface area, on the first cellular level of the mobile radio network and the devices (4) which provide switching nodes for communication connections and are located on the at least one other cellular level (Z2) of the mobile radio network respectively form a cell, which covers a particular surface area, on the respectively other cellular level (Z2) of the mobile radio network, for which purpose the devices (4) which provide switching nodes for communication connections and are located on the at least one other cellular level (Z2) of the mobile radio network are preferably connected to each other in an intermeshed manner.

13. A communication system (1) according to claim 12, **characterized in that** the surface areas covered by the cells of the devices (2, 3) which provide switching nodes for communication connections and are located on the first cellular level (Z1) of the mobile radio network are smaller than the surface areas covered by the cells of the devices (4) which provide switching nodes for communication connections and are located on the at least one other cellular level (Z2) of the mobile radio network.

14. A communication system (1) according to one of the claims 1 through 13, **characterized in that** the surface areas covered by the cells of the devices (2, 3, 4) which provide switching nodes for communication connections and are located on the cellular levels (Z1, Z2) of the mobile radio network at least partially overlap.

15. A communication system (1) according to one of the claims 1 through 14, **characterized by** gateway devices (5) for coupling the mobile radio network to at least one other communication network (6) via at least one device (2, 3, 4) of the mobile radio network, which device provides switching nods for communication connections.

16. A communication system (1) according to claim 15, **characterized in that** the other communication network is a wired telephone network (6), preferably a service-integrated digital wired telephone network (6).

17. A communication system (1) according to claim 15 or claim 16, **characterized in that** the other communication network (6) is a data network, preferably a packet-switching data network.

## Revendications

1. Système de communication (1) composé d'un réseau radio mobile cellulaire ayant une structure de cellules hiérarchique sur au moins deux niveaux cellulaires (Z1, Z2) indépendants l'un de l'autre qui sont formés par des dispositifs (2, 3, 4) fournissant des noeuds de commutation pour des liaisons de communication et des terminaux mobiles (7, 8) opérables dans le réseau radio mobile, dans lequel les dispositifs (2, 3, 4) forment chacun une cellule d'un niveau cellulaire (Z1, Z2) du réseau radio mobile, laquelle cellule couvre une zone de surface particulière pour des liaisons de communication, au moins quelques uns des dispositifs (3, 4) sur les au moins deux niveaux cellulaires (Z1, Z2) du réseau radio mobile sont susceptibles d'être couplés les uns aux autres par niveaux sur les au moins deux niveaux cellulaires (Z1, Z2) du réseau radio mobile pour des liaisons de communication et une liaison de communication (9) est établie entre un terminal mobile (7, 8) et un dispositif (2) sur un premier niveau cellulaire (Z1) du réseau radio mobile en utilisant une liaison radio (9),
**caractérisé en ce que**
les dispositifs (2, 3) fournissant des noeuds de commutation pour des liaisons de communication et disposés sur le premier niveau cellulaire (Z1) du réseau radio mobile sont reliés les uns aux autres en utilisant un premier médium de transmission et les dispositifs (4) fournissant des noeuds de commutation pour des liaisons de communication et disposés sur l'au moins un autre niveau cellulaire (Z2) du réseau radio mobile sont reliés les uns aux autres en utilisant un autre médium de transmission, les dispositifs (4) fournissant des noeuds de commutation pour des liaisons de communication et disposés sur l'au moins un autre niveau cellulaire (Z2) du réseau radio mobile étant reliés les uns aux autres de manière à être maillés entre eux, dans lequel les zones de surface couvertes par les cellules des dispositifs (2, 3) fournissant des noeuds de commutation pour des liaisons de communication et disposés sur le premier niveau cellulaire (Z1) du réseau radio mobile sont plus petites que les zones de surface couvertes par les cellules des dispositifs (4) fournissant des noeuds de commutation pour des liaisons de communication et disposés sur l'au moins un autre niveau cellulaire (Z2) du réseau radio mobile.

2. Système de communication (1) selon la revendication 1, **caractérisé en ce que** l'au moins un autre médium de transmission diffère du premier médium de transmission.

3. Système de communication (1) selon la revendication 1 ou la revendication 2, **caractérisé en ce que** le médium de transmission des dispositifs (2, 3, 4) fournissant des noeuds de commutation pour des liaisons de communication et disposés sur le premier et/ou l'au moins un autre niveau cellulaire (Z1, Z2) du réseau radio mobile est une liaison radio (10, 11).

4. Système de communication (1) selon la revendication 3, **caractérisé en ce que** sur le premier niveau cellulaire (Z1) la liaison radio (10) est une liaison radio (10) dans la plage de fréquences utilisée pour une liaison de communication (9) entre un terminal mobile (7, 8) et un dispositif (2, 3) fournissant des noeuds de commutation pour des liaisons de communication et disposé sur le premier niveau cellulaire (Z1) du réseau radio mobile.

5. Système de communication (1) selon la revendication 3 ou la revendication 4, **caractérisé en ce que** sur l'au moins un autre niveau cellulaire (Z2) la liaison radio est une liaison radio par faisceaux hertziens.

6. Système de communication (1) selon l'une des revendications 1 à 5, **caractérisé en ce que** le médium de transmission des dispositifs (2, 3, 4) fournissant des noeuds de commutation pour des liaisons de communication et disposés sur le premier et/ou l'au moins un autre niveau cellulaire (Z1, Z2) du réseau radio mobile est une liaison optique (12), de préférence réalisée par moyen de laser et/ou des optiques libres dans l'espace (Free Space Optics) et/ou des câbles de fibres optiques.

7. Système de communication (1) selon l'une des revendications 1 à 6, **caractérisé en ce que** le médium de transmission des dispositifs (2, 3, 4) fournissant des noeuds de commutation pour des liaisons de communication et disposés sur le premier et/ou l'au moins un autre niveau cellulaire (Z1, Z2) du réseau radio mobile est une liaison par câble ou avec fil.

8. Système de communication (1) selon l'une des revendications 1 à 7, **caractérisé en ce que** le couplage par niveaux des dispositifs (3) fournissant des noeuds de commutation pour des liaisons de communication et disposés sur le premier niveau cellulaire (Z1) du réseau radio mobile aux dispositifs (4) fournissant des noeuds de commutation pour des liaisons de communication et disposés sur l'au moins un autre niveau cellulaire (Z2) du réseau radio mobile se fait par une liaison radio (11).

9. Système de communication (1) selon la revendication 8, **caractérisé en ce que** la liaison radio (11) est une liaison radio (11) dans la plage de fréquences utilisée pour une liaison de communication (9) entre un terminal mobile (7, 8) et un dispositif (2, 3) fournissant des noeuds de commutation pour des liaisons de communication et disposé sur le premier niveau cellulaire (Z1) du réseau radio mobile.

10. Système de communication (1) selon l'une des revendications 1 à 7, **caractérisé en ce que** le couplage par niveaux des dispositifs (3) fournissant des noeuds de commutation pour des liaisons de communication et disposés sur le premier niveau cellulaire (Z1) du réseau radio mobile aux dispositifs (4) fournissant des noeuds de commutation pour des liaisons de communication et disposés sur l'au moins un autre niveau cellulaire (Z2) du réseau radio mobile se fait par une liaison optique, de préférence par moyen de laser et/ou des optiques libres dans l'espace (Free Space Optics) et/ou des câbles de fibres optiques.

11. Système de communication (1) selon l'une des revendications 1 à 7, **caractérisé en ce que** le couplage par niveaux des dispositifs (3) fournissant des noeuds de commutation pour des liaisons de communication et disposés sur le premier niveau cellulaire (Z1) du réseau radio mobile aux dispositifs (4) fournissant des noeuds de commutation pour des liaisons de communication et disposés sur l'au moins un autre niveau cellulaire (Z2) du réseau radio mobile se fait par une liaison par câble ou avec fil.

12. Système de communication (1) selon l'une des revendications 1 à 11, **caractérisé en ce que** les dispositifs (2, 3) fournissant des noeuds de commutation pour des liaisons de communication et disposés sur le premier niveau cellulaire (Z1) du réseau radio mobile forment chacun une cellule, qui couvre une zone de surface particulière, sur le premier niveau cellulaire du réseau radio mobile et les dispositifs (4) fournissant des noeuds de commutation pour des liaisons de communication et disposés sur l'au moins un autre niveau cellulaire (Z2) du réseau radio mobile forment chacun une cellule, qui couvre une zone de surface particulière, sur l'autre niveau cellulaire respectif (Z2) du réseau radio mobile, à quelle fin les dispositifs (4) fournissant des noeuds de commutation pour des liaisons de communication et disposés sur l'au moins un autre niveau cellulaire (Z2) du réseau radio mobile sont de préférence reliés les uns aux autres de manière à être maillés entre eux.

13. Système de communication (1) selon la revendication 12, **caractérisé en ce que** les zones de surface couvertes par les cellules des dispositifs (2, 3) fournissant des noeuds de commutation pour des liaisons de communication et disposés sur le premier niveau cellulaire (Z1) du réseau radio mobile sont plus petites que les zones de surface couvertes par les cellules des dispositifs (4) fournissant des noeuds de commutation pour des liaisons de communication et disposés sur l'au moins un autre niveau cellulaire (Z2) du réseau radio mobile.

14. Système de communication (1) selon l'une des revendications 1 à 13, **caractérisé en ce que** les zones de surface couvertes par les cellules des dispositifs (2, 3, 4) fournissant des noeuds de commutation pour des liaisons de communication et disposés sur les nivaux cellulaires (Z1, Z2) du réseau radio mobile se chevauchent au moins partiellement.

15. Système de communication (1) selon l'une des revendications 1 à 14, **caractérisé par** des dispositifs de passerelle (Gateway, 5) pour coupler le réseau radio mobile à au moins un autre réseau de communication (6) via au moins un dispositif (2, 3, 4) du réseau radio mobile, lequel dispositif fournit des noeuds de commutation pour des liaisons de communication.

16. Système de communication (1) selon la revendication 15, **caractérisé en ce que** l'autre réseau de communication (6) est un réseau téléphonique avec fil (6), de préférence un réseau téléphonique avec fil et numérique à intégration de services (6).

17. Système de communication (1) selon la revendication 15 ou la revendication 16, **caractérisé en ce que** l'autre réseau de communication (6) est un réseau de données, de préférence un réseau de données à commutation de paquets.
